**Europäisches Patentamt**

**European Patent Office**

**Office européen des brevets**

(11) Numéro de publication : **0 342 104 B1**

(12)

# FASCICULE DE BREVET EUROPEEN

(45) Date de publication du fascicule du brevet :
**19.08.92 Bulletin 92/34**

(51) Int. Cl.⁵ : **B23K 26/00**

(21) Numéro de dépôt : **89401258.2**

(22) Date de dépôt : **03.05.89**

(54) **Procédé de brasage au laser de pièces en un ou plusieurs métaux réfléchissant la lumière.**

(30) Priorité : **09.05.88 FR 8806224**

(43) Date de publication de la demande :
**15.11.89 Bulletin 89/46**

(45) Mention de la délivrance du brevet :
**19.08.92 Bulletin 92/34**

(84) Etats contractants désignés :
**BE CH DE ES GB IT LI**

(56) Documents cités :
**GB-A- 2 126 956**
**PATENT ABSTRACTS OF JAPAN**

(73) Titulaire : **Renaud, Richard**
**32 J, avenue du Commandant Marceau**
**F-25000 Besançon (FR)**

(72) Inventeur : **Renaud, Richard**
**32 J, avenue du Commandant Marceau**
**F-25000 Besancon (FR)**
Inventeur : **Lacoste, Jean**
**4-6, rue du Prévôt**
**F-75004 Paris (FR)**

(74) Mandataire : **Sauvage, Renée**
**Cabinet Sauvage 100 bis, avenue de**
**Saint-Mandé**
**F-75012 Paris (FR)**

EP 0 342 104 B1

## Description

La présente invention a pour objet un procédé de brasage de pièces en un ou plusieurs métaux réfléchissant la lumière, dit, ou globalement dits, "métal de base".

Les applications envisagées sont plus précisément la bijouterie, l'orfèvrerie, l'horlogerie et l'électronique où les pièces à assembler sont souvent délicates et de petites dimensions.

Il n'est pas possible, dans de telles applications, d'avoir recours au procédé de brasage au chalumeau, qui utilise un métal d'apport, car la température de fusion dudit métal d'apport est obtenue en portant une partie importante du métal de base à cette température et il est, par ailleurs, nécessaire de provoquer le "mouillage" du métal d'apport sur le métal de base par l'adjonction d'un "flux" chimique corrosif. Il résulte de cette technique des déformations dues aux contraintes thermiques importantes et une pollution des pièces par le flux chimique. Ces deux inconvénients sont rédhibitoires lors d'assemblages délicats tels que ceux évoqués plus haut.

Il serait possible d'avoir recours au brasage au four qui, lui, ne provoque pas de contraintes thermiques du fait que, dans ce cas, c'est la totalité du métal de base qui est portée à la même température de fusion que le métal d'apport. Par ailleurs, dans la mesure où il s'agit d'un brasage au four sous vide ou sous atmosphère neutre ou réductrice, la présence d'un flux chimique n'est pas requise. Cependant, ce procédé exige une préparation fastidieuse de mise en place du métal d'apport du fait de l'inaccessibilité des pièces en cours de chauffage.

L'idéal serait, comme l'évoque EP-A1-0241621, de procéder à un soudage au laser du fait que ce moyen présente l'intérêt de fournir une énergie spécifique importante susceptible d'être délivrée en un temps très court, donc avec une puissance crête très élevée (plusieurs KW). De telles conditions permettraient de souder des pièces en métaux réfléchissant la lumière, sans entraîner un échauffement important desdites pièces, ni provoquer une zone d'affectation thermique importante.

Malheureusement, du fait que les métaux présentent un fort coefficient de réflexion de la lumière, le rendement du faisceau laser mis en jeu est considérablement diminué. Le coefficient de réflexion de la lumière étant en corrélation avec une conductibilité thermique élevée, l'énergie apportée dans la masse des pièces se dissipe rapidement, ce qui contribue, là encore, à diminuer le rendement énergétique du faisceau.

A titre indicatif, le tableau I ci-dessous indique la résistivité électrique et la conductibilité thermique de différents métaux, propriétés qui sont reliées entre elles par une loi physique connue. Ces deux constantes sont, elles-mêmes, proportionnelles au coefficient de réflexion de la lumière.

| Métal | Résistivité électrique<br><br>$\mu\ \Omega$ cm $-1$ à $20°C$ | Conductibilité thermique<br>cal/s, cm, $°C$ à $20°C$ |
|---|---|---|
| cuivre | 1,5 | 0,96 |
| argent | 1,6 | 1,02 |
| aluminium | 2,69 | 0,56 |
| magnésium | 3,8 | 0,36 |
| or | 2,2 | 0,76 |
| rhodium | 4,5 | 0,36 |
| molybdène | 5 | 0,32 |
| platine | 10 | 0,17 |
| paladium | 12 | 0,18 |

Pour ces raisons, les pièces en argent, en or, mais aussi en cuivre et en aluminium sont très difficiles, voire impossibles, à souder au laser. En outre, les sections soudées sont souvent très faibles dans les applications indiquées, ce qui conduit à des assemblages peu résistants.

La présente invention a pour but d'apporter un procédé de brasage au laser de pièces en un ou plusieurs métaux réfléchissant la lumière, dit ou globalement dits "métal de base" qui remédie aux inconvénients des différents procédés de brasage; et de soudage au laser, analysés ci-dessus.

Ce but est atteint en ce sens que le procédé selon l'invention consiste d'une manière connue en soi, à acheminer, au voisinage immédiat du point de brasage voulu entre les pièces, un métal d'apport compatible avec le métal de base, ledit métal d'apport ayant une conductibilité thermique et un point de fusion inférieurs à ceux du métal de base, ledit procédé se caractérisant en ce que le brasage est fait au laser, ledit métal d'apport ayant un coefficient de réflexion de la lumière inférieur à celui du métal de base.

Le métal d'apport en question peut se présenter sous la forme d'un fil fin.

Le procédé selon l'invention permet de diminuer sensiblement la puissance crête nécessaire à l'assemblage. Il suffit d'appliquer l'impact du faisceau laser sur l'extrémité du fil fin du métal d'apport maintenu en contact avec les pièces du métal de base à assembler. On obtient ainsi facilement la fusion du métal d'apport, simultanément avec un échauffement important du métal de base. Les conditions d'un brasage en faibles dimensions sont ainsi réunies.

Dans une forme d'exécution préférée, le laser est un laser YAG (Yttrium - Aluminium - Garnet (grenat d'yttrium et d'aluminium) et il est à fonctionnement impulsionnel.

Avec un tel laser, le métal d'apport doit être distribué en synchronisation avec les impulsions laser pour réaliser un cordon de brasage.

L'assemblage obtenu est plus robuste du fait de l'apport de métal provenant du fil distribué, ce qui a pour effet d'augmenter la section de métal assemblé. Les combinaisons suivantes sont rapportéees à titre d'exemples.

| Métal de base | | Métal alliage d'apport | |
|---|---|---|---|
| Nature | Point de fusion | Nature | Point de fusion |
| argent | 960,8°C | argent-cuivre | 780°C |
| cuivre | 1083 °C | argent-cuivre | 780°C |
| or | 1063 °C | or-nickel | 950°C |
| aluminium | 660 °C | aluminium-silicium 11% | 577°C |
| magnésium | 650 °C | alumine-magnésium 15% | 451°C |
| paladium | 1552 °C | paladium-or | 1240°C |
| rhodium | 1960 °C | platine | 1768°C |
| platine | 1774 °C | paladium-or | 1240°C |
| molybdène | 2622 °C | platine | 1768°C |

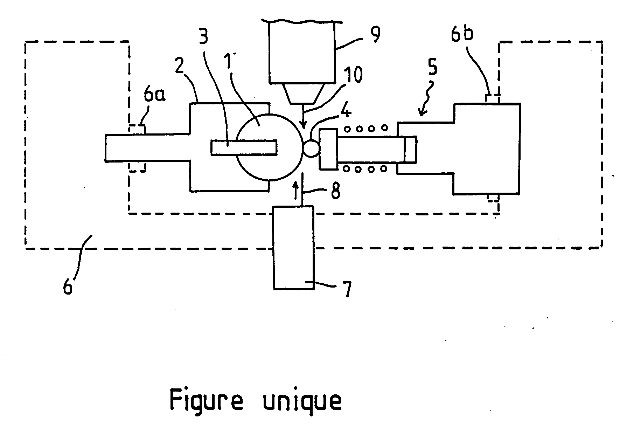

La présente invention sera mieux comprise à la lecture de la description ci-après faite en référence au dessin annexé qui illustre schématiquement un mode de mise en oeuvre d'un soudo-brasage, selon l'invention, de médailles en argent 950‰ ou en bronze florentin.

Le but recherché est de fixer une petite sphère sur le chant d'une médaille.

Si l'on se reporte au dessin, on voit une médaille circulaire 1 reposant sur un support 2 dans lequel est gravée l'empreinte de la médaille pour garantir un centrage parfait de celle-ci. La médaille 1 est maintenue en place par un ressort à lame 3. Une petite pièce sphérique 4 est centrée et plaquée contre le chant de la médaille 1 par un dispositif à piston et ressort 5. Le support 2 et le dispositif 5 sont respectivement serrés dans les mandrins 6a et 6b d'un dispositif d'entraînement en rotation synchronisée 6 qui entraîne également en rotation la médaille 1 et la sphère 4.

Le matériau constitutif de la médaille 1 et de la sphère 4 correspond au métal de base réfléchissant la lumière évoqué plus haut.

Le dispositif selon l'invention comporte, en outre, un appareillage motorisé 7 adapté à distribuer un fil de métal d'apport 8 et comportant à cette fin les composants nécessaires au bon déroulement du fil.

Le fil 8 est apporté à l'interface entre la médaille 1 et la sphère 4. Un laser YAG 9 à fonctionnement impulsionnel est disposé de façon à envoyer un faisceau 10 d'impulsions laser également à l'interface de la médaille 1 et de la sphère 4. Bien que, pour la commodité du dessin, on ait représenté le laser 9 en vis-à-vis de l'appareillage 7, dans la réalité, le laser 9 est situé au-dessus du plan horizontal qui contient la médaille 1 et la sphère 4, et il est orienté perpendiculairement à ce plan, tandis que le fil 8 est situé au-dessous dudit plan horizontal et il est acheminé ver l'interface médaille/sphère en faisant un angle de l'ordre de 80° avec le faisceau 10. Le faisceau 10 est focalisé sur l'extrémité du fil 8.

Lorsque le fil 8 est en contact avec l'interface médaille/sphère, le déclenchement des impulsions laser provoquent simultanément la fusion de l'extrémité du fil 8 et l'échauffement localisé du métal de base de la médaille 1 et de la sphère 4. Il y a alors formation d'un cordon brasé qui est appliqué par répétition des impulsions. Bien entendu, l'opération est rendue possible par une synchronisation judicieuse de l'entraînement en rotation du support 2, du système à piston et ressort 5, de la médaille 1 et de la sphère 4, du déroulement du fil 8 et du déclenchement des impulsions du laser 9.

Des variantes peuvent être apportées au mode de mise en oeuvre qui vient d'être décrit. En particulier, au lieu d'un laser YAG à fonctionnement impulsionnel, on pourrait utiliser un laser YAG à fonctionnement continu ou un laser $CO_2$ à fonctionnement impulsionnel ou continu. Le métal d'apport, qui pourrait se présenter sous toute autre forme convenable qu'un fil, pourrait être d'une autre composition, pourvu qu'elle satisfasse aux conditions de coefficient de réflexion de la lumière, de conductibilité thermique et de point de fusion indiquées dans les généralités précédant l'exemple de mise en oeuvre.

## Revendications

1. Procédé de brasage de pièces en un ou plusieurs métaux réfléchissant la lumière dit, ou globalement dits, "métal de base", qui consiste à acheminer, au voisinage immédiat du point de brasage voulu entre les pièces (1, 4), un métal d'apport (8) compatible avec le métal de base, ledit métal d'apport (8) ayant une conductibilité thermique et un point de fusion inférieurs à ceux du métal de base, caractérisé en ce que le brasage est fait au laser, ledit métal d'apport ayant un coefficient de reflexion à la lumière inférieur à celui du métal de base.

2. Procédé selon la revendication 1, caractérisé en ce que le laser (9) est un laser YAG.

3. Procédé selon la revendication 1 ou 2, caractérisé en ce que le laser (9) est à fonctionnement impulsionnel.

4. Procédé selon l'une quelconque des revendications 1 à 3, caractérisé en ce que le métal d'apport (8) se présente sous la forme d'un fil fin.

5. Procédé selon la revendication 3 ou 4, caractérisé en ce qu'il consiste à synchroniser la distribution du métal d'apport (8) avec les impulsions du laser (9).

6. Procédé selon l'une quelconque des revendications 1 à 5, caractérisé en ce qu'il consiste à choisir, comme métal d'apport, un alliage argent-cuivre si le métal de base est l'argent ou le cuivre.

7. Procédé selon l'une quelconque des revendications 1 à 5, caractérisé en ce qu'il consiste à choisir, comme métal d'apport, un alliage or-nickel si le métal de base est l'or.

8. Procédé selon l'une quelconque des revendications 1 à 5, caractérisé en ce qu'il consiste à choisir, comme métal d'apport, un alliage aluminium-silicium si le métal de base est l'aluminium.

9. Procédé selon l'une quelconque des revendications 1 à 5, caractérisé en ce qu'il consiste à choisir, comme métal d'apport, un alliage alumine-magnésium si le métal de base est le magnésium.

10. Procédé selon l'une quelconque des revendications 1 à 5, caractérisé en ce qu'il consiste à choisir, comme métal d'apport, un alliage paladium-or si le métal de base est le paladium ou le platine.

11. Procédé selon l'une quelconque des revendications 1 à 5, caractérisé en ce qu'il consiste à choisir, comme métal d'apport, un alliage en platine sur le métal de base est le rhodium et le molybdène.

## Claims

1. Process for brazing parts made of one light-reflecting metal, so-called "base metal", or of several light-reflecting metals, together so-called "base metal", which consists in bringing, close to the desired brazing spot between the parts (1, 4), a filler metal (8) compatible with said base metal, said filler metal (8) having a thermal conductibility and a melting point lower than those of the base metal, characterized in that the brazing is carried out using a laser, said filler metal having a light-reflecting coefficient lower than that of the base metal.

2. Process according to claim 1, characterized in that the laser (9) is a YAG laser.

3. Process according to claim 1 or 2, characterized in that the laser (9) is a pulse laser.

4. Process according to anyone of claims 1 to 3, characterized in that the filler metal (8) is in the form of a thin wire.

5. Process according to claim 3 or 4, characterized in that it consists in synchronizing the supply in filler metal (8) and the laser pulses.

6. Process according to anyone of claims 1 to 5, characterized in that it consists in selecting, as filler metal, a silver-copper alloy when the base metal is silver or copper.

7. Process according to anyone of claims 1 to 5, characterized in that it consists in selecting, as filler metal, a gold-nickel alloy when the base metal is gold.

8. Process according to anyone of claims 1 to 5, characterized in that it consists in selecting, as filler metal, an aluminum-silicium alloy when the base metal is aluminum.

9. Process according to anyone of claims 1 to 5, characterized in that it consists in selecting, as filler metal, an alumina-magnesium alloy when the base metal is magnesium.

10. Process according to anyone of claims 1 to 5, characterized in that it consists in selecting, as filler metal, a palladium-gold alloy when the base metal is palladium or platinum.

11. Process according to anyone of claims 1 to 5, characterized in that it consists in selecting, as filler metal, a platinum alloy when the base metal is rhodium or molybdenum.


**Patentansprüche**

1. Verfahren zum Löten von Werkstücken aus einem oder mehreren Licht reflektierenden Metallen, das bzw. die zusammen Basismetall genannt werden, gemäß welchem in die unmittelbare Nähe des gewünschten Lötpunktes zwischen den Werkstücken (1, 4) ein mit dem Basismetall kompatibles Zusatzmetall (8) gebracht wird, dessen Wärmeleitfähigkeit und dessen Schmelzpunkt unter denen des Basismetalls liegen, dadurch gekennzeichnet, daß die Lötung mit einem Laser vorgenommen wird, wobei der Lichtreflexionskoeffizient des Zusatzmetalls kleiner als der des Basismetalls ist.

2. Verfahren nach Anspruch 1, dadurch gekennzeichnet, daß der Laser (9) ein Yag-Laser ist.

3. Verfahren nach Anspruch 1 oder 2, dadurch gekennzeichnet, daß der Laser (9) im Pulsbetrieb arbeitet.

4. Verfahren nach einem der Ansprüche 1 bis 3, dadurch gekennzeichnet, daß das Zusatzmetall (8) in Form eines dünnen Drahts vorgesehen ist.

5. Verfahren nach Anspruch 3 oder 4, dadurch gekennzeichnet, daß die Abgabe des Zusatzmetalls (8) mit den Impulsen des Lasers (9) synchronisiert wird.

6. Verfahren nach einem der Ansprüche 1 bis 5, dadurch gekennzeichnet, daß als Zusatzmetall eine Silber-Kupfer-Legierung gewählt wird, wenn das Basismetall Silber oder Kupfer ist.

7. Verfahren nach einem der Ansprüche 1 bis 5, dadurch gekennzeichnet, daß als Zusatzmetall eine Gold-Nickel-Legierung gewählt wird, wenn das Basismetall Gold ist.

8. Verfahren nach einem der Ansprüche 1 bis 5, dadurch gekennzeichnet, daß als Zusatzmetall eine Aluminium-Silizium-Legierung gewählt wird, wenn das Basismetall Aluminium ist.

9. Verfahren nach einem der Ansprüche 1 bis 5, dadurch gekennzeichnet, daß als Zusatzmetall eine Aluminiumoxid-Magnesium-Legierung gewählt wird, wenn das Basismetall Magnesium ist.

10. Verfahren nach einem der Ansprüche 1 bis 5, dadurch gekennzeichnet, daß als Zusatzmetall eine Palladium-Gold-Legierung gewählt wird, wenn das Basismetall Palladium oder Platin ist.

11. Verfahren nach einem der Ansprüche 1 bis 5, dadurch gekennzeichnet, daß als Zusatzmetall eine Platinlegierung gewählt wird, wenn das Basismetall Rhodium oder Molybdän ist.

Figure unique